(19)

Europäisches Patentamt

European Patent Office

Office européen des brevets

(11) **EP 4 230 794 B1**

(12) **EUROPEAN PATENT SPECIFICATION**

(45) Date of publication and mention of the grant of the patent:
**25.02.2026 Bulletin 2026/09**

(21) Application number: **21879939.3**

(22) Date of filing: **06.10.2021**

(51) International Patent Classification (IPC):
**D21H 21/02** (2006.01)       **C02F 1/24** (2023.01)
**D21F 1/66** (2006.01)       **B03D 1/004** (2006.01)
**B03D 1/02** (2006.01)       **B03D 1/08** (2006.01)
**C02F 103/28** (2006.01)

(52) Cooperative Patent Classification (CPC):
**C02F 1/24; B03D 1/0043; B03D 1/02; B03D 1/028; B03D 1/082; D21F 1/66; D21H 21/02;**
B03D 2201/02; B03D 2203/008; C02F 2103/28

(86) International application number:
**PCT/JP2021/036899**

(87) International publication number:
**WO 2022/080199 (21.04.2022 Gazette 2022/16)**

(54) **METHOD FOR TREATING PITCH-CONTAINING WATER BEING TREATED IN PAPER MANUFACTURING PROCESS**

VERFAHREN ZUR BEHANDLUNG VON PECH ENTHALTENDEM WASSER BEI DER PAPIERHERSTELLUNG

PROCÉDÉ POUR LE TRAITEMENT D'EAU CONTENANT DU BRAI EN COURS DE TRAITEMENT DANS UN PROCESSUS DE FABRICATION DE PAPIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.10.2020 JP 2020173360**

(43) Date of publication of application:
**23.08.2023 Bulletin 2023/34**

(73) Proprietor: **Kurita Water Industries Ltd.**
**Tokyo 164-0001 (JP)**

(72) Inventors:
• **TAGUCHI Chigusa**
**Tokyo 164-0001 (JP)**
• **WADA Satoshi**
**Tokyo 164-0001 (JP)**
• **SAIGUSA Takashi**
**Tokyo 164-0001 (JP)**
• **SURUGA Keiji**
**Tokyo 164-0001 (JP)**

(74) Representative: **TBK**
**Bavariaring 4-6**
**80336 München (DE)**

(56) References cited:
WO-A1-2019/176182       WO-A1-2019/176182
CN-A- 1 766 227       CN-A- 105 217 753
CN-U- 202 072 970       JP-A- 2019 039 113
JP-A- H05 156 584       JP-A- H06 257 082
JP-A- H07 504 235       JP-A- S63 152 493

• DEEPA K TIKU ET AL: "Effectiveness of Treatment Technologies for Wastewater Pollution Generated by Indian Pulp Mills", ENVIRONMENTAL MONITORING AND ASSESSMENT ; AN INTERNATIONAL JOURNAL DEVOTED TO PROGRESS IN THE USE OF MONITORING DATA IN ASSESSINGENVIRONMENTAL RISKS TO MAN AND THE ENVIRONMENT, KLUWER ACADEMIC PUBLISHERS, DO, vol. 132, no. 1-3, 13 February 2007 (2007-02-13), pages 453 - 466, XP019526540, ISSN: 1573-2959, DOI: 10.1007/S10661-006-9548-3

**Description**

Technical Field

The present invention relates to a method for treating pitch-containing water to be treated in a paper manufacturing process.

Background Art

Paper manufacturing is conducted through a papermaking step of subjecting a raw material slurry where a pulp raw material is dispersed in water, to papermaking. In the papermaking step, a large amount of water including a fine fiber such as pulp and a loading material is discharged from a papermaking machine. From the viewpoint of effective utilization and recycle of a water resource, pulp-containing water discharged is returned by a water recovery step or the like to and used in the papermaking step with circulation.

The pulp-containing water discharged is here repeatedly circulated and used, and thus this water used includes much pitch generated in a paper manufacturing process. Moreover, waste paper includes many components causing pitch, and thus much pitch is easily included in pulp-containing water in a preparation step where waste paper is used as a raw material, and a subsequent papermaking step.

In general, pitch means a hydrophobic sticking material mainly including a pulp-derived resin component, a synthetic sticky material in regenerated waste paper, and organic matter derived from a chemical agent added for use in a paper manufacturing process.

While pitch is present with being dispersed as colloid in water, it is precipitated in water by breakage of a colloid state due to a large change in shear force, the change in pH, the change in water temperature, addition of a chemical agent, and/or the like, to thereby form a coagulated product of fine pitch or with a loading material such as calcium carbonate, a fine fiber, and/or the like. In addition, pitch is high in hydrophobicity and thus easily adheres to a papermaking tool such as a wire or felt. This may cause contamination of a pitch-derived coagulated product into a manufactured product, water squeezing failure, paper breakage, and the like. Thus, pitch causes the occurrence of the problems of, for example, reductions in quality of a manufactured product and in yield, and a reduction in productivity due to stopping of maintaining and then cleaning of a papermaking tool and the like. Such a trouble due to pitch, leading to reductions in quality of a manufactured product and in a production efficiency, is called pitch trouble.

Thus, for example, various chemical agents capable of suppressing pitch in a paper manufacturing process are studied. For example, as such a pitch suppressor, a synthetic polymer, an inorganic coagulant, or the like is used. Such a pitch suppressor is expected to exert the effects of reducing the stickiness of pitch and dispersing pitch itself so as not to cause formation of a coagulated product, and thus hardly causes the occurrence of any pitch trouble.

For example, JP 2015 527497 A proposes a method for controlling sedimentation of organic contaminants from fibers in a paper manufacturing system, the method including treating an aqueous fiber-containing suspension with at least one lipase and at least one peroxide source-free oxidant, in which the organic contaminants include one or more pitch components.

WO 2019/176182 A1 discloses applying aeration to pulp-containing white water and adding a pitch control agent to the white water to suppress coagulation of pitch.

Takeshi KANAZAWA, Optimum Design of Screening Apparatus for Sticky Removal, JAPAN TAPPI JOURNAL, 1997, vol. 51, No. 1, p. 40-47 describes slipping of pitch having a size of 400 $\mu$m or 500 $\mu$m, through a screening apparatus.

Summary of Invention

Technical Problem

The above techniques in JP 2015 527497 A and WO 2019/176182 A1 are techniques for suppressing the occurrence of pitch and/or dispersing pitch itself in pulp-containing water by chemical agent treatment, and do not allow any pitch to be discharged outside the system.

The present inventors have decided to study a technique capable of efficiently discharging pitch contained in pulp-containing water, outside the system.

In other words, a main object of the present invention is to provide a technique capable of efficiently discharging pitch outside the system from pitch-containing water in a paper manufacturing process.

Solution to Problem

In order to solve the above problems, the present inventors have focused on properties of pitch-containing water in a preparation step, a papermaking step and a water recovery step, and have made intensive studies about a technique for efficiently discharging pitch outside the system from the pitch-containing water in consideration of the properties. As a result, the present inventors have found a technique capable of efficiently discharging pitch outside the system from pitch-containing water by applying aeration to pitch-containing water and thus generating gas bubbles, and have completed the present invention.

The present invention provides a method for treating pitch-containing water to be treated in a paper manufacturing process as specified in claim 1.

The dependent claims define further developments of the present invention.

Advantageous Effects of Invention

According to the present invention, a technique capable of efficiently discharging pitch outside the system from pitch-containing water in a paper manufacturing process can be provided.

Herein, the effects of the present invention are not necessarily limited to the effects here described, and may be any effects described in the present specification.

Brief Description of Drawings

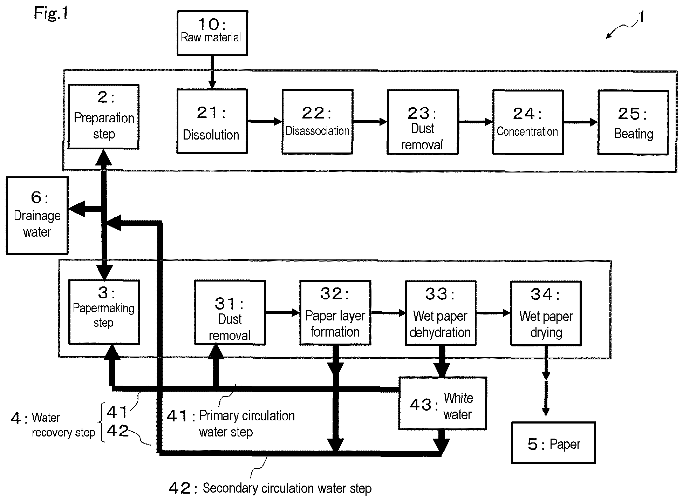

[Fig. 1] Fig. 1 is a schematic diagram illustrating one example of a paper manufacturing process (preparation step, papermaking step, and water recovery step) according to the present embodiment, and steps in the present embodiment are not limited thereto.

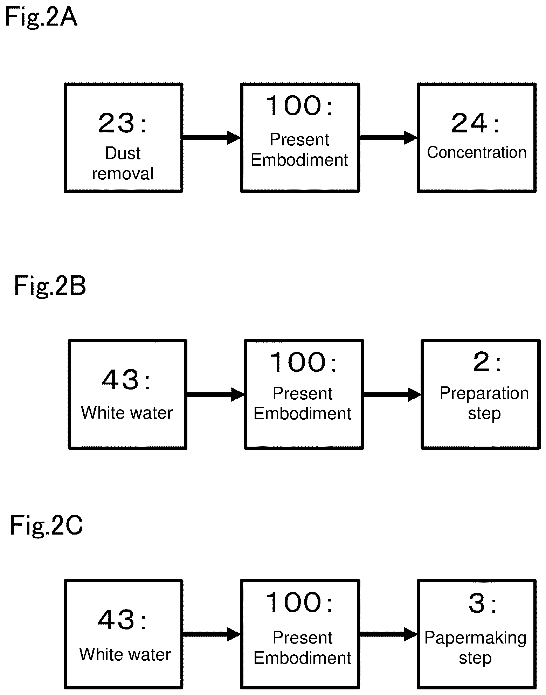

[Fig. 2] Fig. 2 is a schematic diagram illustrating one example of an installation location of an apparatus according to the present embodiment, Fig. 2A illustrates one example of a preparation step, Fig. 2B and Fig. 2C each illustrate one example of a papermaking step, and an installation location of the apparatus of the present embodiment is not limited thereto.

Description of Embodiments

Hereinafter, modes for carrying out the present invention are described. Herein, each embodiment described below shows one example of a representative embodiment of the present invention, and the scope of the present invention is not interpreted as being limited thereto. Herein, an upper limit value and a lower limit value, as numerical values, can be optionally arbitrarily combined.

1. Method for treating pitch-containing water to be treated in paper manufacturing process, according to the present invention

The present invention can provide a method for treating pitch-containing water to be treated in a paper manufacturing process, comprising generating gas bubbles by applying aeration to the water to be treated to thereby remove pitch. The pitch to be removed is further suitably froth formed by adhesion to gas bubbles.

The pitch-containing water to be treated in a paper manufacturing process is suitably pitch-containing water to be treated in one, or two or more selected from the group consisting of a preparation step, a papermaking step, and a water recovery step. Furthermore, it is suitably pitch-containing water to be treated in a preparation step, with waste paper except for waste newspaper, as a raw material.

The water to be treated suitably has a suspended solid concentration of 0.3% or more and/or the particle size of the pitch is suitably 20 $\mu$m or more.

The water to be treated is suitably water to be treated, after being subjected to screening treatment, and is more suitably water to be treated, after being subjected to screening treatment and before being subjected to the next step.

A non-ionic surfactant having a HLB value of 12 or less is suitably added, and polyalkylene glycol having a HLB value of 12 or less is more suitably added to the water to be treated.

While the present inventors presume the mechanism of pitch removal in the method of the present embodiment, as the following hypothesis, the mechanism is still much unclear and the mechanism of the present invention is further intensively studied by the inventors.

Gas bubbles generated by aeration in a tank for treating pitch-containing treated water are hydrophobic as compared with water. In this regard, pitch is also a hydrophobic foreign object. Such gas bubbles are blown into a paper manufacturing slurry having specific properties, by aeration, thereby moving pitch contained in water, from the water to a bubble surface, due to hydrophobic interaction. Furthermore, pitch adhering to a gas bubble surface travels to an aqueous surface of the slurry due to flotation of gas bubbles, and is present as a scum where such pitch is concentrated, near an aqueous surface.

Since a fine bubble scum formed by adhesion of such pitch to gas bubbles is in the state of being concentrated and densified near an aqueous surface, such a dense bubble scum can be disposed outside the system by the flow of an aqueous surface, or recovered by a froth removal apparatus such as a scraper and discharged outside the system.

Thus, the paper manufacturing slurry having specific properties is combined with aeration, thereby enabling pitch included in the paper manufacturing slurry to be selectively discharged outside the system.

Furthermore, treated water, in which pitch is efficiently removed from pitch-containing water to be treated, has a favorably reduced pitch content, and thus can be transferred to and recycled in a preparation step and/or a papermaking step.

Therefore, the pitch content inside the system can be reduced and any pitch-derived trouble inside the system (in particular, papermaking step) can be suppressed.

Thus, pitch can be efficiently discharged outside the system from pitch-containing water to be treated in one, or two or more selected from the group consisting of a preparation step, a papermaking step, and a water recovery step in a paper manufacturing process.

Steps in an embodiment according to the present invention can be applied to production, an apparatus or a system. For example, in the case of a paper manufacturing process, the paper manufacturing process may be made by paper manufacturing (manufacturing of paper), a paper manufacturing apparatus, or a paper manufacturing system.

## 1-1. Summary of paper manufacturing process

The paper manufacturing process using the method of the present embodiment is not particularly limited, and the method of the present embodiment can be applied to a known paper manufacturing process or a paper manufacturing process that can be produced in future.

The paper manufacturing process in the present embodiment suitably includes a preparation step, a papermaking step, and a water recovery step. Fig. 1 illustrates one example, but the steps in the present embodiment are not limited thereto.

The preparation step may be a common preparation step, and may be, for example, configured so as to adjust and compound a raw material (pulp or the like) for use in papermaking and thus make a raw material for paper manufacturing. The papermaking step may be a common papermaking step, and may be configured so as to form a raw material for paper manufacturing, into a sheet by a papermaking machine. The water recovery step may be a common water recovery step, may be, for example, configured so as to recover, circulate or discharge water generated in the preparation step and/or the papermaking step, and is preferably a step of recovering water generated in the papermaking step.

It is suitable in the method of the present embodiment to treat pitch-containing water to be treated in one, or two or more selected from the group consisting of the preparation step, the papermaking step, and the water recovery step in the paper manufacturing process.

Hereinafter, the preparation step, the papermaking step, and the water recovery step in the present embodiment are described in detail (see, for example, Fig. 1), but such each step in the present embodiment is not limited thereto.

## 1-1-1. Preparation step

The preparation step is not particularly limited and may be a usual preparation step, and examples thereof include a step of preparing chemical pulp, mechanical pulp or waste paper pulp.

The preparation step in the method of the present embodiment is preferably a preparation step with waste paper as a raw material. The waste paper includes a component from which pitch originates, and the method of the present embodiment can efficiently discharge pitch outside the system, from pitch-containing water in such a preparation step with the waste paper as a raw material.

The waste paper for use as a raw material in the preparation step is not particularly limited, examples thereof include waste newspaper, cardboard waste paper (cardboard box waste paper, liner waste paper, and the like), white waste paper and high-grade waste paper (white paper of 100% of virgin pulp, white paper with waste paper as a raw material, plain paper, high-grade paper, and the like), and low-grade waste paper (magazine waste paper, mixed waste paper, waste paper of certificate of land title, regenerated paper, and the like), and one, or two or more selected therefrom can be used.

Examples of the waste paper pulp obtained in such a waste paper preparation step include waste newspaper pulp, cardboard waste paper pulp, white waste paper pulp, high-grade waste paper pulp, and low-grade waste paper pulp. One, or two or more selected from such waste paper pulp may be used as a pulp raw material for paper manufacturing, or such waste paper pulp and furthermore chemical pulp and/or mechanical pulp may be included.

The waste paper for use in such a waste paper preparation step is preferably waste paper except for waste newspaper. In the method of the present embodiment, substantially no waste newspaper is preferably included in the total waste paper, and, for example, 5%, 3%, 1% or 0.5% or less of waste newspaper in the total waste paper is included. Herein, the pitch-containing water to be treated, in the papermaking step and the water recovery step, may include waste paper pulp, and this waste paper pulp may include waste newspaper pulp.

In the method of the present embodiment, it is preferable to use pitch-containing water to be treated in a preparation step of making a raw material for paper manufacturing, with waste paper except for waste newspaper, as a raw material, and it is preferable to exclude, from the preparation step, a step of preparing waste newspaper with waste newspaper as a raw material.

Examples of the preparation step include a dissolution step by a pulper apparatus or the like, a disaggregation step by a kneader apparatus or the like, a dust removal step by a cleaner apparatus, a screening apparatus, and/or the like, cleaning and/or concentration step(s) by a thickener apparatus or the like, a beating step by a refiner apparatus or the like, and a combination thereof.

A cleaner step in the dust removal step is a step configured so as to separate a large foreign object contaminated into a raw material, such as beaching and a stapler needle, by a separation apparatus such as a cleaner apparatus.

A screening step in the dust removal step is a step configured so as to remove a foreign object not capable of passing through a slit width provided in the screening apparatus. Examples of a screening form include a slit screening form and a hole screening form, but are not limited thereto. As one example, in the case of a slit screen having a predetermined (for example, 400 $\mu$m or 500 $\mu$m) slit width, for example, a foreign object having a size equal to or more than a predetermined (for example, 400 $\mu$m or 500 $\mu$m) size, which is contained in pitch-containing water to be treated when the pitch-containing water to be treated passes through a slit screen having a predetermined slit width, cannot pass through the slit width and is removed.

In the method of the present embodiment, the cleaner step of removing a large foreign object and the screening step of removing a small foreign object are preferably performed in the listed order, in the dust removal step.

In the preparation step, the disaggregation step, the dust removal step, the concentration step, and the beating step are preferably performed in the listed order, and a dissolution step of dissolving a raw material and the dust removal step may be added before these steps, and the dissolution step and the dust removal step, as well as the disaggregation step, the dust removal step, the concentration step, and the beating step may be performed in the listed order.

It is preferable in the method of the present embodiment to treat pitch-containing water in a step after the screening step in the dust removal step in the preparation step. Herein, a step "after" means the preparation step, the papermaking step, and the water recovery step after the screening step. In a more suitable aspect of the present embodiment, pitch-containing water in one, or two or more selected from the group consisting of the cleaning and/or the concentration step, the beating step, the papermaking step, and the water recovery step is treated.

The method of the present embodiment can efficiently discharge even pitch, which has a size so as to slip through a dust removal apparatus such as a screen, outside the system, and thus pitch-containing water to be treated is more preferably treated after dust removal treatment (suitably after screening treatment). This is more preferable from the viewpoint that treated water reduced in pitch is provided and a pitch trouble is suppressed in the next step and subsequent steps (see, for example, Fig. 2A).

In general, in the case of a deinked pulp production process, examples include a disassociation step, a first dust removal (rough sorting) step, a deinking step, a second dust removal (fine sorting) step, a cleaning step, a bleaching step by a bleaching tower or the like, and a storage step by a chest or the like, and these may be sequentially performed.

A main object of the method of the present embodiment is to efficiently discharge pitch outside the system, which has not been able to deal by a conventional paper manufacturing process, and the method can also deal with the above-mentioned pitch slipping through a screen. Thus, the method of the present embodiment is to use not pitch-containing water in a deinking step, but pitch-containing water to be treated, in any step other than a deinking step.

The method of the present embodiment can also deal with the above-mentioned pitch slipping through a screen, and thus, in the case of a paper manufacturing process including a deinking step, it is preferable to treat pitch-containing water to be treated, in the papermaking step or the water recovery step. Thus, pitch slipping through in a screening step can be more favorably treated to thereby provide treated water reduced in pitch.

The preparation system or the preparation apparatus for performing the preparation step may be configured so as to make a raw material for paper manufacturing, and a common preparation system or preparation apparatus may also be used.

1-1-2. Papermaking step

The papermaking step is not particularly limited, and may be a usual papermaking step.

The papermaking step includes a paper layer formation step of pouring a raw material for paper manufacturing (paper stock finely sorted) prepared, onto a mesh for filtration to thereby form a paper layer, in a wire part; a wet paper dehydration step of passing wet paper obtained, together with a blanket (felt), between two rolls for compression dehydration, in a press part; and a primary circulation water step of recovering water (in particular, pulp-containing water) from each water generated in these steps, in a storage unit and a flow path (silo, pit, pipe, and the like) to thereby circulate the water in a seed box, a chest, and the like, and such water in the papermaking step includes pitch in addition to pulp. The papermaking step may include a wet paper drying step of drying the wet paper in a drier part after the wet paper dehydration step.

It is preferable in the method of the present embodiment to treat pitch-containing water to be treated in one, or two or more selected from the group consisting of the paper layer formation step, the wet paper dehydration step, and the primary circulation water step in the papermaking step.

In the method of the present embodiment, pitch is included in the water generated and/or the water recovered in the papermaking step, and thus such pitch-containing water can be treated as pitch-containing water to be treated. In a more suitable aspect, examples include shower water in the wire part, cleaning water for a wire, felt, and the like, water or a filtrate recovered from a seal pit, a white water silo, a recovery water tank, and the like, and pitch-containing water to be treated from one, or two or more selected from such examples may be treated.

The papermaking system or the papermaking apparatus for performing the papermaking step may be configured so as to be capable of papermaking, and a common papermaking system or papermaking apparatus may also be used.

Examples of the papermaking system or the papermaking apparatus here provided include a wire part, a press part and a drier part, but are not limited thereto, and furthermore one, or two or more selected from the group consisting of a dust removal apparatus such as a screen, a chest (for example, a mixing chest and a machine chest), a refiner, a seed box and an inlet, a white water silo, a seal pit, a recovery water tank, a water flow path for white water recovery, and the like may be further provided.

1-1-3. Water recovery step

The water recovery step is not particularly limited, and is usually configured so as to recover and circulate water in order to recycle water (for example, shower water, cleaning water, excess water, white water, and a filtrate) generated in each step (more suitably the preparation step and/or the papermaking step) in the paper manufacturing process, in the preparation step and/or the papermaking step. For example, one, or two or more selected from the group consisting of a dust removal apparatus such as a screen, a pressure flotation apparatus, a polydisc filter, a water storage unit, a chest, a pipe and a flow path, a pump, and the like is/are provided for the water recovery step, and is/are preferably connected in a network manner so as to be able to recover, circulate, or treat water for any purpose.

In the method of the present embodiment, pitch is included in water recovered, circulated and recycled in the water recovery step, and thus the pitch-containing water in the water recovery step is preferably treated as pitch-containing water to be treated.

The water recovery step in the present embodiment preferably includes a primary circulation water step and a secondary circulation water step. In general, circulation of water in the papermaking step is referred to as "primary circulation", and circulation of water generated in the papermaking step, and transferred out of the step and circulated is referred to as "secondary circulation".

As one example, the primary circulation water step is preferably to recover water generated in the papermaking step, and to circulate and recycle the water recovered, in the papermaking step.

As one example, the secondary circulation water step is preferably configured so as to recover water generated in the papermaking step, and to transfer and recycle the water recovered, to and in the preparation step, or discharge the water recovered, outside the system.

The water recovery system or the water recovery apparatus for performing the water recovery step is configured so as to be able to recover water generated in each step, transfer water to an objective facility, and circulate water, and, for example, may be configured so as to include a water storage unit, a chest, a pipe and a flow path, a pump, a dust removal apparatus such as a screen, and/or the like, and be connected in a network manner for any purpose.

1-2. Pitch-containing water to be treated

The pitch-containing water to be treated, used in the present embodiment, is suitably pitch-containing water in the paper manufacturing process, as described in "1-1." above, and the pitch-containing water may include pulp and the pulp may be any of virgin pulp, waste paper pulp or a mixture thereof.

In a suitable aspect, the pitch-containing water to be treated in the paper manufacturing process is pitch-containing water to be treated in one, or two or more selected from the group consisting of the preparation step, the papermaking step, and the water recovery step.

The methods for measuring properties of the pitch-containing water to be treated, in the present embodiment, are shown in <Measurement methods used in present embodiment> in Examples described below.

Properties of the pitch-containing water to be treated, used in the present embodiment, while are described below, are so as to fall within suitable numerical value ranges by dilution (for example, dilution with water) and/or concentration (for example, heat, a membrane, or depressurization), and the dilution or the concentration may be performed in an apparatus configured so as to dilute and/or concentrate the pitch-containing water to be treated. The pH of the water to be treated is a pH of 5 to 10.

1-2-1. Pulp concentration in pitch-containing water to be treated

The pulp concentration in the pitch-containing water to be treated is not particularly limited, a more suitable lower limit value thereof is preferably 1000 mg/L or more, more preferably 2000 mg/L or more, further preferably 3000 mg/L or more and a more suitable upper limit value thereof is preferably, 35000 mg/L or less, more preferably 30000 mg/L or less, further preferably 25000 mg/L or less, and the suitable numerical value range is more preferably 1000 to 35000 mg/L, further preferably 3000 to 30000 mg/L. Thus, pitch can be more efficiently discharged outside the system from the pitch-containing water in the preparation step, the papermaking step and the water recovery step, and thus the amount of pitch inside the system can be reduced and a pitch trouble can be suppressed.

The pulp concentration (mg/L) can be calculated from the suspended solid weight (mg/L) - the ash content weight (mg/L) - the pitch weight (mg/L).

1-2-2. Suspended solid concentration (SS concentration) in pitch-containing water to be treated

The suspended solid concentration of the pitch-containing water to be treated is 0.3% or more, preferably 0.4% or more and a suitable upper limit value thereof is preferably 10% or less, more preferably 5% or less, further preferably 4% or less, still more preferably 3% or less. The suitable numerical value range is more preferably 0.3 to 10%, further preferably 0.4 to 5%. The suspended solid concentration can be determined according to "(1) Suspended solid concentration" in

<Measurement methods used in present embodiment> described below.

Thus, pitch can be more efficiently discharged outside the system from the pitch-containing water in at least one of the preparation step, the papermaking step, or the water recovery step, and thus the amount of pitch inside the system can be reduced and furthermore a pitch trouble inside the system can be suppressed.

The present inventors have found that, in the method of the present embodiment, as shown in Examples described below, if the suspended solid concentration of the pitch-containing water to be treated is raised from 0.1% to 0.2%, the selective concentration factor of pitch in froth is lightly reduced, and if the concentration exceeds 0.2% and then reaches 0.5%, the selective concentration factor is rapidly raised and a high concentration factor is exhibited.

If the suspended solid concentration of the pitch-containing water to be treated is not low, but higher, the amount of a chemical agent such as a pitch suppressor is usually supposed to be increased. However, the method of the present embodiment can more efficiently discharge pitch outside the system from even pitch-containing water to be treated, high in suspended solid concentration, in the paper manufacturing process. Additionally, the method of the present embodiment, in which mechanical aeration is used, thus can more easily discharge pitch outside the system from pitch-containing water to be treated, than use of a chemical agent required to be adjusted in concentration. Furthermore, the method of the present embodiment more efficiently discharge pitch outside the system, even in the case of pitch having a size so as to slip through a screen, or even in the case of a predetermined or higher suspended solid concentration of the pitch-containing water to be treated. Thus, the method of the present embodiment can efficiently discharge pitch outside the system, from the pitch-containing water to be treated, even in the case of difficult pitch removal. Thus, the pitch content inside the system can be reduced and furthermore a pitch trouble inside the system (in particular, papermaking step) can be suppressed.

1-2-3. Size of pitch (particle size) in pitch-containing water to be treated

The size (particle size) of the pitch included in the pitch-containing water to be treated is 20 μm or more and a suitable upper limit value thereof is 425 μm or less, and a suitable numerical value range is 20 μm or more and 425 μm or less. The size of the pitch can be determined by sieving as described in "(2) Particle size of pitch" in <Measurement methods used in present embodiment> below.

A chemical agent such as a common pitch suppressor can effectively treat pitch having a size of several tens of micrometers or less, but is not suitable for treatment of pitch of several tens of micrometers or more, particularly, equal to or more than 100 μm. Furthermore, pitch is generally removed with a screen, and it is confirmed that pitch is high in softness and thus is changed in shape and formed into pitch having a size equal to or more a slit width, for example, pitch having a size of 400 μm or 500 μm and such pitch slips through a screen as mentioned above. In the case of such large pitch being included in water to be treated, it has been technically difficult to sufficiently discharge such pitch outside the system even by use of a conventional chemical treatment or mechanical treatment.

However, the method of the present embodiment can be used to thereby favorably treat even water to be treated, containing large pitch having a size of 20 μm or more, and favorably remove pitch from the water to be treated. Thus, according to the present embodiment, even large pitch can be efficiently discharged outside the system, and thus the amount of pitch inside the system can be reduced and a pitch trouble can be suppressed. In addition, treated water reduced in large pitch can be recycled in the preparation step and/or the papermaking step.

1-2-4. Ash content in pitch-containing water to be treated

The amount of an ash content included in the pitch-containing water to be treated is not particularly limited, a suitable lower limit value thereof is preferably 100 mg/L or more, more preferably 300 mg/L or more, further preferably 400 mg/L or more and a suitable upper limit value thereof is preferably 10000 mg/L or less, more preferably 7000 mg/L or less, further preferably 5000 mg/L or less. The suitable numerical value range is more preferably 300 to 7000 mg/L, further preferably 400 to 5000 mg/L. Thus, pitch can be more efficiently discharged outside the system of paper manufacturing, from the pitch-containing water in the preparation step, the papermaking step and the water recovery step.

1-3. Pitch removal step

The method of the present embodiment can remove pitch by aeration of the pitch-containing water to be treated and thus generation of gas bubbles. Aeration can be used to thereby provide froth obtained by selective adhesion of pitch to gas bubbles, and float the froth near an aqueous surface. Thus, pitch can be floated and separated, and then discharged outside the system.

In a more specific description, gas bubble generation by aeration and thus contact of pitch present in water with gas bubbles allows the pitch to adhere to the gas bubbles and float near an aqueous surface, and be concentrated near an aqueous surface, to thereby form froth. Since the froth is higher in pitch concentration, treatment near such an aqueous surface can be made to thereby allow the pitch highly contained in the froth to be efficiently easily recovered. The froth recovered can be simply discharged outside the system. Thus, not only pitch can be efficiently discharged outside the system from the pitch-containing water to be treated in the paper manufacturing process, but also the pitch content inside the system can be reduced. Thus, a pitch trouble inside the system can also be suppressed. The resulting treated water has a reduced pitch content and also has fewer pitch-derived trouble, and thus can be more favorably recycled in the preparation step and/or the papermaking step.

The pitch removal step in the present embodiment preferably includes a gas bubble generation step of generating gas bubbles by aeration and/or stirring, and preferably further includes a froth removal step of discharging froth including pitch, formed by the gas bubbles, outside the system, after the gas bubble generation step. The pitch removal step in the present embodiment more preferably includes such gas bubble generation step and froth removal step.

1-3-1. Method for aerating pitch-containing water to be treated

The aeration method is not particularly limited, and a known aeration method may also be used. In the aeration method, gas bubbles can also be supplied to the pitch-containing water to be treated.

The aeration method here adopted, can be, for example, a method of using a diffuser, a stirring apparatus, or the like. While aeration can also be made by strong stirring so that air is taken by a stirring apparatus configured so as to be capable of aeration, diffusion is preferable because the size, the direction, the amount, and the like of gas bubbles are easily adjusted.

Furthermore, a method is preferably adopted where a diffuser (for example, a floatater) including a gas bubble generation unit capable of generating gas bubbles by diffusion members such as a diffuser tube and a diffuser plate is used, from the viewpoint that aeration can be stably and continuously performed. In a more suitable aspect, the method where the diffuser is used can efficiently perform aeration by providing the gas bubble generation unit (or apparatus) on the bottom of a tank and blowing fine gas bubbles downward and/or upward from the bottom to thereby increase the contact efficiency between the pitch-containing water to be treated and the gas bubbles.

The gas bubble generation unit is not particularly limited, and a method is preferably adopted where a gas bubble generation unit configured so as to be able to generate fine gas bubbles is used. The direction in which gas bubbles are sent by the gas bubble generation unit may be any of the bottom direction, the side surface direction, or the upper direction of a tank, and thus gas bubbles can be sprayed in the bottom direction, the side surface direction, or the upper direction to thereby generate convection.

The particle size of bubbles generated in the method of the present embodiment is not particularly limited and is preferably fine, a suitable lower limit value thereof is preferably 0.5 mm or more, more preferably 1 mm or more and a suitable upper limit value thereof is preferably 10 mm or less, more preferably 5 mm or less, further preferably 3 mm or less, and the suitable numerical value range is more preferably 1 to 3 mm.

The amount of a gas for the aeration in the method of the present embodiment is not particularly limited, a more suitable lower limit value thereof per liter of sample water is preferably 0.5 L/min or more, more preferably 0.7 L/min or more, further preferably 1 L/min or more, still further preferably 1.2 L/min or more, and the upper limit value is not particularly limited and can be appropriately set depending on the performance of an aeration apparatus used. The gas is preferably air. The aeration time in the method of the present embodiment is not particularly limited, and can be appropriately set depending on the performance of an aeration apparatus used, the size of a tank used, or the like.

The water temperature in the pitch-containing water to be treated, in aeration in the method of the present embodiment, is not particularly limited, a suitable lower limit value thereof is preferably 20°C or more, more preferably 30°C or more, more preferably 35°C or more and a suitable upper limit value thereof is preferably 50°C or less, more preferably 45°C or less. The suitable numerical value range is more preferably 20 to 50°C. Thus, froth is easily formed in contact of pitch and gas bubbles, and therefore pitch can be efficiently discharged outside the system from the pitch-containing water to be treated.

Herein, the water temperature of the pitch-containing water to be treated, adopted in treatment in "1-3-2. Method for removing froth including pitch" described below, can correspond to the temperature condition in the "water temperature of the pitch-containing water to be treated, in the aeration", and is more preferably 20 to 50°C.

The pitch-containing water to be treated is preferably not only aerated, but also stirred so as to generate convection, in the method of the present embodiment. Such convection is more preferably vertical convection or horizontal convection. This not only makes it possible to uniformly contact the pitch-containing water to be treated, in a tank, with gas bubbles, but also makes it easy to form froth in contact of pitch and gas bubbles, and thus pitch can be efficiently discharged outside the system from the pitch-containing water to be treated.

The stirring method is not particularly limited, and a method is preferably adopted where a stirring apparatus configured so as to generate convection in the pitch-containing water to be treated, by stirring, is used. Examples of the stirring apparatus include an underwater stirring apparatus including one or more stirring blades or injection tools, but are not limited thereto.

### 1-3-2. Method for removing froth including pitch

The froth removal method is not particularly limited, and a method can be adopted where a usual froth removal apparatus is used. The froth removal method here adopted is preferably a method where a mechanism or an apparatus configured so as to allow froth near an aqueous surface to tap into a flow near an aqueous surface and thus be discharged, a mechanism or an apparatus configured so as to scrape froth near an aqueous surface, or the like is used. Since froth highly concentrated, in the aeration method, is present near an aqueous surface in a tank, pitch can be more efficiently easily discharged outside the system from the pitch-containing water to be treated, even if a simple apparatus or mechanism is adopted. Herein, the conditions in "1-3-1." described above (for example, water temperature) can be appropriately adopted for the conditions of froth removal.

The method for discharging froth by a flow near an aqueous surface, here adopted, is more specifically, for example, preferably a method where a mechanism or an apparatus that collects and drops froth near an aqueous surface, into a drainage port provided at a slightly high or low position as compared with such an aqueous surface, and thus removes the froth is used.

The method for scraping froth near an aqueous surface, here adopted, is more specifically, for example, preferably a method where an apparatus such as a travelling or rotating apparatus with a scraping plate (Krofta), Scoop Robo (automatic recovery apparatus of floating matter), or a skimmer such as a mini-skimmer (ultra-compact recovery apparatus of floating matter) is used. One, or two or more selected therefrom may be used.

Such a mechanism or apparatus may be configured so as to, for example, include an apparatus (scraping apparatus, recovery apparatus, transfer pump, or the like), a tank, a flow path, and the like to enable pitch to be discharged outside the system. For example, a froth removal apparatus may be adopted which is configured so as to remove froth formed by adhesion of pitch to gas bubbles. The mechanism or apparatus may be configured so as to be connected with other unit(s) (for example, an apparatus (such as a pump), a tank, and/or a flow path) to finally discharge pitch outside the system.

### 1-3-3. Selective concentration factor of pitch in froth

In the method of the present embodiment, gas bubbles are generated by applying aeration to the pitch-containing water to be treated to thereby remove pitch, and thus the selective concentration factor of pitch in froth can be enhanced.

Furthermore, in the method of the present embodiment, treatment of the pitch-containing water to be treated is performed so as to enhance the selective concentration factor of pitch in froth, and thus pitch can be efficiently discharged outside the system from the pitch-containing water to be treated.

Treated water where pitch is efficiently removed from the pitch-containing water to be treated has a significantly reduced pitch content, and can be transferred to and recycled in the preparation step and/or the papermaking step. The treated water can be used to thereby reduce a pitch trouble occurring in the paper manufacturing process.

A more suitable lower limit value of the selective concentration factor of pitch in froth in the method of the present embodiment is preferably 2 or more, more preferably 3 or more, further preferably 4 or more, still more preferably 5 or more, more preferably 5.5 or more, more preferably 6 or more. The upper limit value of the selective concentration factor of pitch in froth is not particularly limited because the method of the present embodiment can allow for treatment for two stages or three stages even in a continuous manner, and the upper limit value can be, for example, 500 or less, 250 or less or 100 or less, and can also be, for example, 10 or less, 20 or less, or 50 or less. If the suspended solid concentration of the pitch-containing water to be treated is 0.5% or more, the selective concentration factor of pitch in froth is rapidly increased, and thus the method of the present embodiment is more preferably used in a step where the suspended solid concentration is higher.

1-3-4. Use of chemical agent

A chemical agent is further contained in the pitch-containing water to be treated, for the purpose of an enhancement in adsorption selectivity of pitch to bubbles in the above aeration or for the purpose of a more enhancement in pitch removal ratio.

Such a chemical agent can be used in an application for an enhancement in adsorption selectivity of pitch to bubbles or an application for an enhancement in pitch removal ratio, or in a composition or formulation for the application, or can be a composition or formulation including such a chemical agent, for an enhancement in adsorption selectivity of pitch to bubbles or for an enhancement in pitch removal ratio. Such a chemical agent may also be used to produce a composition or formulation for an enhancement in adsorption selectivity of pitch to bubbles or for an enhancement in pitch removal ratio. Such a chemical agent may be added for use in a method for enhancing the adsorption selectivity of pitch to bubbles or a method for enhancing the pitch removal ratio. As such a chemical agent used in the present embodiment, a chemical agent obtained by a known production method may be used, or a commercially available product may be used.

1-3-4-1. HLB value

The HLB value of the chemical agent is 12 or less, and a combination use with a chemical agent low in HLB value and high in hydrophobicity can enhance the pitch concentration effect in further recovery. The HLB value of the chemical agent is 6 or more, preferably 8 or more, more preferably 10 or more, thereby not only facilitating contact with pitch in water to be treated, but also allowing pitch to easily adhere to gas bubbles and be separated from water to be treated, and floated, in the aeration.

The HLB value is widely known with respect to the HLB calculation method by Oda et al., (Ryohei Oda et al., "Surfactant Synthesis and Their Applications", Maki Shoten (1964)), and is calculated by the following (mathematical formula 1). The "inorganic value" and "organic value" in the following (mathematical formula 1) are values predetermined with respect to each group in a compound, and the HLB is calculated by summing such values with respect to the entire compound.

$$\text{HLB} = (\Sigma \text{ inorganic value}/\Sigma \text{ organic value}) \times 10 \text{ ... (mathematical formula 1)}$$

1-3-4-2. Surfactant

The chemical agent is a surfactant, more specifically, preferably a surfactant having a hydrophobic group. The hydrophobic group is preferably an alkyl group and/or an alkylene group, and such a group may be any of a linear, branched, or cyclic group, and is preferably linear or branched. More specific examples include alkyl groups having 1 to 4 carbon atoms, such as a methyl group, a propyl group, and a butyl group; and alkylene groups having 1 to 4 carbon atoms, such as a methylene group, an ethylene group, a propylene group, and a butylene group, and one, or two or more selected therefrom can be adopted. Such a surfactant may be a homopolymer or a copolymer with other monomer.

In the present embodiment, a non-ionic surfactant is used and polyalkylene glycol is preferred, and the polyalkylene glycol can be represented by the following (chemical formula 1).

$$\text{HO-} (R\text{-O})_n\text{-H ...} \qquad \text{(chemical formula 1)}$$

In the (chemical formula 1), R is preferably a linear or branched alkylene group having 1 to 4 carbon atoms, and n is an integer and n ≥ 450 (suitably n ≥ 20) is preferred.

The "alkylene group" in the (chemical formula 1) is preferably the same as the definition of the "alkylene group" described above, and in particular, an alkylene group having 1 to 3 carbon atoms is more preferred and an ethylene group is further preferred, and "n" described above is preferably about 5 to 20, more preferably 5 to 10.

1-3-4-3. Number-average molecular weight

The number-average molecular weight of the chemical agent (polymer) used in the present embodiment is not particularly limited, a suitable lower limit value thereof is preferably 100 or more, more preferably 200 or more, further preferably 300 or more and a suitable upper limit value thereof is preferably 3000 or less, more preferably 2000 or less, further preferably 1000 or less.

The number-average molecular weight of the "polymer" or watersoluble high-molecular-weight polymer used in the present embodiment can be measured by GPC (gel permeation chromatography) analysis with standard polystyrene as a standard material.

1-3-4-4. Amount of chemical agent used

The amount of the chemical agent used in the present embodiment is 0.1 mg/L or more, preferably 0.5 mg/L or more, more preferably 1 mg/L or more relative to the pitch-containing water to be treated, and is preferably determined with appropriate addition in observation of the state of froth occurrence and is 50 mg/L or less, preferably 20 mg/L or less, more preferably 10 mg/L or less, still more preferably 5 mg/L or less.

Furthermore, the chemical agent is preferably added in a step of treating the pitch-containing water to be treated or a step of removing pitch.

A location where the chemical agent is used is more preferably a place or an apparatus, where treatment of the pitch-containing water to be treated or pitch removal is performed, or an upstream location thereof. Examples of the upstream location suitably include a pipe or a flow path connected to a location or an apparatus where the treatment or removal is performed.

In a still suitable aspect, the chemical agent is preferably added at a location where the aeration is made, or an upstream location thereof. More specifically, the chemical agent is preferably added in a tank configured so as to generate gas bubbles by the aeration, or a step or a flow path located before the tank. The step or flow path located before the tank is preferably a pipe or flow path that is connected to the tank and that is located immediately before flowing into the tank.

1-3-5. Examples in the present embodiment

More specific aspects of the method for treating pitch-containing water to be treated of the embodiment are illustrated in, for example, Fig. 1 and 2, but are not limited thereto. A paper manufacturing process 1 includes a preparation step 2, a papermaking step 3, and a water recovery step 4 of recovering water generated in each of such steps.

The preparation step 2 includes a dissolution step 21, a disassociation step 22, a dust removal step (cleaner step, screening step) 23, a concentration step 24, and a beating step 25, and a raw material 10 such as waste paper can be formed into a raw material for paper manufacturing, through the dissolution step 21 toward the beating step 25 in the preparation step 2.

The papermaking step 3 includes a dust removal step 31, a paper layer formation step 32, a wet paper dehydration step 33, and a wet paper drying step 34, and the papermaking step can finally make paper 5. The papermaking step 3 (respective steps 31 to 34) is linked to a water recovery step of recovering primary circulation water 41 and/or secondary circulation water 42, in which water (for example, pitch and pulp-containing water) generated in papermaking, such as cleaning water, is recovered.

In the water recovery step 4, water generated in the papermaking step 3 is recovered. Water that can be recycled is circulated in the preparation step 2 and/or the papermaking step 3, and unnecessary water is discharged as drainage water 6, outside the system.

A method 100 for treating pitch-containing water to be treated, in the present embodiment, can be used for the paper manufacturing process, and can be suitably used in one step, or two or more selected from the group consisting of the preparation step 2, the papermaking step 3, and the water recovery step 4. Furthermore, the treatment method 100 of the present embodiment can treat pitch-containing water to be treated in one, or two or more selected from the group consisting of the preparation step 2, the papermaking step 3, and the water recovery step 4.

For example, as illustrated in Fig. 2A, the method 100 for treating pitch-containing water to be treated, in the present embodiment, can be used between the dust removal (suitably screening) step 23 and the concentration step 24 in the preparation step 2.

The treatment method 100 of the present embodiment can treat pitch-containing water to be treated, generated after the dust removal (suitably, screening) step 23 and before the concentration step 24 in the preparation step 2.

According to the treatment method 100 of the present embodiment, treated water having a reduced pitch content can be transferred to the concentration step 24 and water including pitch can be discharged as the drainage water 6, outside the system.

For example, as illustrated in Fig. 2B and Fig. 2C, the method 100 for treating pitch-containing water to be treated, of the present embodiment, can be used between white water 43 including excess white water in the papermaking step 3 and the preparation step 2 and/or the papermaking step 3.

According to the treatment method 100 of the present embodiment, treated water having a reduced pitch content can be transferred to the preparation step 2 and/or the papermaking step 3, in which there may be a plurality of locations to which the treated water is to be transferred. The water including pitch, after treatment, can go through the secondary circulation water step 42 and be discharged as the drainage water 6, outside the system.

The method 100 for treating pitch-containing water to be treated, in the present embodiment, may be repeatedly performed until a predetermined value (for example, predetermined "selective concentration factor of pitch in froth") is achieved.

Herein, in the method for treating pitch-containing water to be treated, according to the embodiment of the present invention, the descriptions in, for example, "2." and "3." below can also be applied to the present embodiment and the descriptions can be appropriately adopted.

Examples

Embodiments of the present invention are described with reference to the following Examples and Comparative Examples, among which Example 4 falls within the terms of claim 1. Herein, the scope of the present invention is not limited to such Examples and the like.

[Test Example 1: floatation test]

Each sample of Examples 1 to 5 and Comparative Examples 1 to 2 (water to be treated, including pitch and cardboard waste paper pulp) was prepared as described below. Floatation was performed on such each sample, and fine bubble scum (froth) formed by adhesion of pitch floated near an aqueous surface was scraped by a scraper (scraping plate).

<Measurement methods used in present embodiment>

Measurement methods used in the present embodiment are as follows.

(1) Suspended solid concentration

The suspended solid (SS) concentration in each of water to be treated and treated water was determined by subjecting a sample to measurement according to JIS K0102.

(2) Particle size of pitch

The particle size of pitch in each of water to be treated and treated water was determined by subjecting a sample to sieving with an opening sieve.

(3) Pitch concentration

The pitch concentration in each of water to be treated and treated water was determined by subjecting a sample to sieving with an opening sieve and then adding Nile red (1.25 mg/L) to the sample subjected to sieving and measuring the absorbance with an AquaFluor Handheld Fluorometer (manufactured by Turner Designs Inc.). The calibration curve was created with an aqueous EVA-based adhesive EL-105 (manufactured by Regitex Co., Ltd.) as a preparation in the range of 0 to 250 mg/L as the concentration of EL-105.

(4) Ash content

The ash content in each of water to be treated and treated water was measured according to JIS K0102.

(5) Absolute dry mass of SS

The absolute dry mass of SS in each of water to be treated and treated water was a mass determined by drying a sample in a drier at a temperature of 105 ± 5°C until a constant mass was achieved, and then performing cooling and humidity conditioning in a room adjusted to a room temperature of 23°C and a humidity 50%.

(6) pH

The pH (40°C) in each of water to be treated and treated water was determined by subjecting a sample to measurement with a common pH meter (for example, "Portable pH meter D-54 (pH/mV (ORP)/COND/electric resistivity/salt content/TDS)" manufactured by Horiba Ltd., or a successor thereto).

(7) Pulp concentration (pulp weight)

The pulp concentration (pulp weight) (mg/L) in each of water to be treated and treated water was calculated based on "Pulp weight + Ash content weight + Pitch weight = Suspended solid concentration (SS weight)".

(8) Pitch concentration and selective concentration factor of pitch in froth

The pitch removal effect was determined by using the SS concentration and the pitch ratio, removed in froth, to thereby determine the pitch concentration and the selective concentration factor of pitch in froth, by the following (expression 2) and (expression 3).

Pitch concentration = (Pitch concentration in filtrate after filtration at 425 μm) - (Pitch concentration in filtrate after filtration at 20 μm)  (Expression 2)

Selective concentration factor of pitch in froth = (Pitch concentration in froth/Pitch concentration in raw water)/ (SS concentration in froth/SS concentration in raw water)  (Expression 3)

The more detail is as follows.

Each test slurry of Examples 1 to 5 and Comparative Examples 1 to 2 was prepared by disaggregating a cardboard not used after purchase, by tap water so that the suspended solid (SS) concentration reached a predetermined concentration. Herein, Canadian Standard freeness was prepared so as to be in an amount of 300 mL. These were used as test slurries (pH at a SS concentration of 1%: 6.5 (water temperature 40°C)).
Such each test slurry (Examples 1 to 5 and Comparative Examples 1 to 2) was prepared by adjustment to 40°C so that the suspended solid concentration shown in Table 2 was achieved, and was adopted as each sample. Herein, pitch removal chemicals A and B were respectively added to the test slurries adjusted to 40°C of Examples 4 and 5, before treatment in a floatater, so as to be each in an amount of 1.4 mg/L relative to sample water.
A small desktop floatater apparatus (MT-5L manufactured by Ishikawajima Industrial Machinery Co., Ltd.) was used with air in an amount of 6 L/min to generate gas bubbles (gas bubbles having a particle size of 1 to 2 mm) in each of the samples, and floatation was performed on such each sample for 3 minutes with horizontal convection being generated under a medium-stirring condition (rotational rate: substantially 3800 rpm). Such a small desktop floatater is configured so as to perform stirring where plain gas bubbles are contacted with a turbine rotated at a high rate and thus crushed to gas bubbles of 1 to 2 mm to result in not only aeration in a 360-degree direction, but also generation of horizontal convection.
The froth was recovered by scraping with travelling of a scraper attached to the small desktop floatater apparatus, near an aqueous surface with respect to 30 seconds.
The pitch removal chemicals used are collectively shown in Table 1. The number-average molecular weight and the HLB value in Table 1 can be calculated by the method described in the above <1-3-3. Chemical agent added>.

Table 1 Pitch removal chemical list

| Chemical name | Composition | Number-average molecular weight | HLB value |
|---|---|---|---|
| Chemical A | Esterified polyethylene glycol | 400 | 11.8 |
| Chemical B | Esterified polyethylene glycol | 600 | 13.7 |

Thereafter, the SS concentration contained in the froth recovered in floatation treatment was measured according to JIS K0102. The pitch concentration in the froth was determined by adding Nile red so as to achieve a concentration of 1.25 mg/L to the filtrate in filtration with a sieve having an opening of 425 $\mu$m or 20 $\mu$m, and measuring the absorbance with an AquaFluor Handheld Fluorometer (manufactured by Turner Designs Inc.).

The pitch removal effect was determined from the SS concentration and the pitch ratio, removed in the froth. The selective concentration factor of pitch in froth was determined by the above "(7) Pitch concentration and selective concentration factor of pitch in froth".

The results with respect to Examples 1 to 5 and Comparative Examples 1 to 2 are collectively shown in Table 2.

<Results>

When the floatater was used as in Examples 1 to 5 and the SS concentration in raw water was 0.5% or more, a higher concentration factor was exhibited by pitch than SS in froth. This indicated that pitch more selectively adsorbed to bubbles and was floated and separated than SS. It was found by the present inventors that, while the concentration factor was decreased with the variation in SS concentration in raw water from 0.1% to 0.2% as in Comparative Examples 1 to 2, the concentration factor was reversed and rapidly raised with the variation in SS concentration in raw water to 0.5% or more as in Examples 1 to 5. It was found by the present inventors that pitch here had a relatively large particle size of 20 $\mu$m or more and 425 $\mu$m or less and thus pitch could be efficiently removed from pitch-containing water containing pitch having a large particle size.

It was further found by the present inventors that Example 4 where chemical A was used in combination exhibited a high concentration factor of pitch as compared with Example 5 and thus the concentration effect could be further enhanced by combination use of a chemical low in HLB value (suitably HLB value: 12 or less), namely, high in hydrophobicity with a floatater.

Table 2 Selective concentration factor of pitch in froth

| | Suspended solid concentration (%) | Pitch removal chemical | Selective concentration factor of pitch in froth | Raw water SS (mg/L) | Raw water pitch (mg/L) | Froth SS (mg/L) | Froth pitch (mg/L) | Raw water ash content (mg/L) | Froth ash content (mg/L) | Absolute dry mass of SS (g) | Raw water pulp weight (mg/L) |
|---|---|---|---|---|---|---|---|---|---|---|---|
| Example 1 | 0.5 | | 5.87 | 5034 | 1349 | 5748 | 9049 | 612 | 1840 | 27.2 | 3073 |
| Example 2 | 1 | | 5.24 | 9734 | 1879 | 15517 | 15704 | 1200 | 4816 | 52.6 | 6655 |
| Example 3 | 2 | | 5.93 | 20486 | 1729 | 19956 | 9996 | 2572 | 6492 | 110.6 | 16185 |
| Example 4 | 1 | Chemical A | 6.18 | 10257 | 1439 | 16262 | 14090 | 1264 | 5656 | 55.4 | 7554 |
| Example 5 | 1 | Chemical B | 3.5 | 10051 | 2768 | 15717 | 15140 | 1231 | 4891 | 54.3 | 6052 |
| Comparative Example 1 | 0.2 | | 0.88 | 1966 | 989 | 2001 | 882 | 236 | 540 | 10.6 | 741 |
| Comparative Example 2 | 0.1 | | 1 | 964 | 715 | 964 | 715 | 116 | 116 | 5.2 | 133 |

Reference Signs List

1: paper manufacturing process, 10: raw material, 2: preparation step, 21: dissolution step, 22: disassociation step, 23: dust removal step (cleaner step, screening step), 24: concentration step, 25: beating step, 3: papermaking step, 31: dust removal step, 32: paper layer formation step, 33: wet paper dehydration step, 34: wet paper drying step, 4: water recovery step, 41: primary circulation water step, 42: secondary circulation water step, 43: white water, 5: paper, 6: drainage water, 100: treatment step (pitch removal step) or apparatus of pitch-containing water to be treated of present embodiment

**Claims**

1. A method for treating pitch-containing water to be treated in a paper manufacturing process, wherein

   the pitch-containing water to be treated in the paper manufacturing process is pulp-containing water to be treated, after being subjected to screening treatment,
   the water to be treated contains pitch having a particle size of 20 $\mu$m or more and 425 $\mu$m or less,
   the water to be treated is water to be treated in one, or two or more selected from the group consisting of a preparation step (2), a papermaking step (3), and a water recovery step (4) and not water to be treated in a deinking step,
   the water to be treated has a suspended solid concentration of 0.3% or more, and
   the water to be treated has a pH of 5 to 10,
   the method comprising:

      adding a non-ionic surfactant having a HLB value of 6 or more and 12 or less to the water to be treated in an amount of 0.1 mg/L or more and 50 mg/L or less;
      generating gas bubbles by applying aeration to the water to be treated; and
      removing froth formed by adhesion of the pitch to gas bubbles to thereby remove pitch.

2. The method for treating pitch-containing water to be treated according to claim 1, wherein a selective concentration factor of pitch in froth is 3 or more, where selective concentration factor of pitch in froth = (pitch concentration in froth/pitch concentration in raw water)/ (suspended solid concentration in froth/suspended solid concentration in raw water).

3. The method for treating pitch-containing water to be treated according to claim 1 or 2, wherein the non-ionic surfactant is a surfactant having a hydrophobic group.

4. The method for treating pitch-containing water to be treated according to any one of claims 1 to 3, wherein the non-ionic surfactant is polyalkylene glycol.

5. The method for treating pitch-containing water to be treated according to claim 4, wherein the alkylene is ethylene.

6. The method for treating pitch-containing water to be treated according to claim 5, wherein the polyalkylene glycol is esterified polyethylene glycol.

7. The method for treating pitch-containing water to be treated according to any one of claims 1 to 6, wherein the amount of the non-ionic surfactant used is 0.5 mg/L or more and 10 mg/L or less.

**Patentansprüche**

1. Verfahren zur Behandlung von pechhaltigem Wasser, das in einem Papierherstellungsprozess behandelt werden soll, wobei

   das pechhaltige Wasser, das im Papierherstellungsprozess behandelt werden soll, zellstoffhaltiges Wasser ist, das nach einer Siebbehandlung behandelt werden soll,
   das zu behandelnde Wasser Pech mit einer Partikelgröße von 20 $\mu$m oder mehr und 425 $\mu$m oder weniger enthält,

das zu behandelnde Wasser Wasser ist, das in einem oder zwei oder mehreren Schritten behandelt werden soll, die aus der Gruppe ausgewählt sind, die aus einem Aufbereitungsschritt (2), einem Papierherstellungsschritt (3) und einem Wasserrückgewinnungsschritt (4) besteht, und kein Wasser ist, das in einem Deinking-Schritt behandelt werden soll,

das zu behandelnde Wasser eine Schwebstoffkonzentration von 0,3 % oder mehr aufweist, und

das zu behandelnde Wasser einen pH-Wert von 5 bis 10 aufweist,

wobei das Verfahren umfasst:

Zugabe eines nichtionischen Tensids mit einem HLB-Wert von 6 oder mehr und 12 oder weniger zu dem zu behandelnden Wasser in einer Menge von 0,1 mg/l oder mehr und 50 mg/l oder weniger;

Erzeugen von Gasblasen durch Belüften des zu behandelnden Wassers; und

Entfernen von Schaum, der durch Anhaftung des Pechs an Gasblasen gebildet wird, um dadurch das Pech zu entfernen.

2. Verfahren zur Behandlung von zu behandelndem pechhaltigem Wasser gemäß Anspruch 1, wobei ein selektiver Konzentrationsfaktor von Pech im Schaum 3 oder mehr beträgt, wobei der selektive Konzentrationsfaktor von Pech im Schaum = (Pechkonzentration im Schaum/Pechkonzentration im Rohwasser)/(Konzentration der suspendierten Feststoffe im Schaum/Konzentration der suspendierten Feststoffe im Rohwasser) ist.

3. Verfahren zur Behandlung von zu behandelndem pechhaltigem Wasser gemäß Anspruch 1 oder 2, wobei das nichtionische Tensid ein Tensid mit einer hydrophoben Gruppe ist.

4. Verfahren zur Behandlung von zu behandelndem pechhaltigem Wasser gemäß einem der Ansprüche 1 bis 3, wobei das nichtionische Tensid Polyalkylenglykol ist.

5. Verfahren zur Behandlung von zu behandelndem pechhaltigem Wasser gemäß Anspruch 4, wobei das Alkylen Ethylen ist.

6. Verfahren zur Behandlung von zu behandelndem pechhaltigem Wasser gemäß Anspruch 5, wobei das Polyalkylenglykol verestertes Polyethylenglykol ist.

7. Verfahren zur Behandlung von zu behandelndem pechhaltigem Wasser gemäß einem der Ansprüche 1 bis 6, wobei die Menge des verwendeten nichtionischen Tensids 0,5 mg/l oder mehr und 10 mg/l oder weniger beträgt.

## Revendications

1. Procédé de traitement d'eau contenant du brai à traiter dans un processus de fabrication de papier, dans lequel

l'eau contenant du brai à traiter dans le processus de fabrication de papier est de l'eau contenant de la pâte à papier à traiter, après avoir été soumise à un traitement de tamisage,

l'eau à traiter contient du brai ayant une taille de particules de 20 $\mu$m ou plus et de 425 $\mu$m ou moins,

l'eau à traiter est une eau à traiter dans une, ou deux ou plusieurs étapes choisies parmi le groupe comportant une étape de préparation (2), une étape de fabrication de papier (3) et une étape de récupération d'eau (4), et n'est pas une eau à traiter dans une étape de désencrage,

l'eau à traiter a une concentration en solides en suspension de 0,3 % ou plus, et

l'eau à traiter a un pH compris entre 5 et 10,

le procédé comprenant :

l'ajout d'un tensioactif non ionique ayant une valeur HLB de 6 ou plus et de 12 ou moins à l'eau à traiter, en une quantité de 0,1 mg/L ou plus et de 50 mg/L ou moins ;

la génération des bulles de gaz en aérant l'eau à traiter ; et

l'élimination de la mousse formée par l'adhérence du brai aux bulles de gaz afin d'éliminer le brai.

2. Procédé de traitement d'eau contenant du brai selon la revendication 1, dans lequel un facteur de concentration sélective du brai dans la mousse est supérieur ou égal à 3, où le facteur de concentration sélective du brai dans la mousse = (concentration de brai dans la mousse/concentration de brai dans l'eau brute)/(concentration de solides en suspension dans la mousse/concentration de solides en suspension dans l'eau brute).

3. Procédé de traitement d'eau contenant du brai selon la revendication 1 ou 2, dans lequel le tensioactif non ionique est un tensioactif ayant un groupe hydrophobe.

4. Procédé de traitement d'eau contenant du brai selon l'une quelconque des revendications 1 à 3, dans lequel le tensioactif non ionique est un polyalkylèneglycol.

5. Procédé de traitement d'eau contenant du brai selon la revendication 4, dans lequel l'alkylène est l'éthylène.

6. Procédé de traitement d'eau contenant du brai selon la revendication 5, dans lequel le polyalkylèneglycol est du polyéthylèneglycol estérifié.

7. Procédé de traitement d'eau contenant du brai selon l'une quelconque des revendications 1 à 6, dans lequel la quantité d'agent tensioactif non ionique utilisée est de 0,5 mg/L ou plus et de 10 mg/L ou moins.

Fig.1

Fig.2A

| 23 :<br>Dust<br>removal | → | 100 :<br>Present<br>Embodiment | → | 24 :<br>Concentration |
|---|---|---|---|---|

Fig.2B

| 43 :<br>White water | → | 100 :<br>Present<br>Embodiment | → | 2 :<br>Preparation<br>step |
|---|---|---|---|---|

Fig.2C

| 43 :<br>White water | → | 100 :<br>Present<br>Embodiment | → | 3 :<br>Papermaking<br>step |
|---|---|---|---|---|

## REFERENCES CITED IN THE DESCRIPTION

**Patent documents cited in the description**

- JP 2015527497 A

- WO 2019176182 A1

**Non-patent literature cited in the description**

- **TAKESHI KANAZAWA**. Optimum Design of Screening Apparatus for Sticky Removal. *JAPAN TAPPI JOURNAL*, 1997, vol. 51 (1), 40-47

- **RYOHEI ODA** ; **MAKI SHOTEN et al.** *Surfactant Synthesis and Their Applications*, 1964